# EUROPEAN PATENT SPECIFICATION

(11) **EP 3 038 801 B1**
(45) Date of publication and mention of the grant of the patent: **08.11.2017**
(21) Application number: 14741596.2
(22) Date of filing: 18.07.2014
(51) Int. Cl.: B26D 1/00, B26D 7/27, B26D 7/10, B26D 7/26, B29C 65/74, B26D 7/00, F01N 13/00, B29C 65/36, B29C 65/00, B65B 51/30, B65B 61/06

(54) **KNIFE FOR A SEALING JAW ARRANGEMENT OF A FILLING MACHINE**
MESSER FÜR EINE ANORDNUNG VON SIEGELBACKEN EINER FÜLLMASCHINE
COUTEAU POUR UNE ASSEMBLÉE DES MÂCHOIRES DE SCELLEMENT DANS UNE REMPLISSEUSE

(30) Priority: 28.08.2013 SE 1350988
(43) Date of publication of application: 06.07.2016
(73) Proprietor: Tetra Laval Holdings & Finance SA, 1009 Pully (CH)
(72) Inventor: TEGMAN, Niklas, 236 31 Höllviken (SE); HERMODSSON, Göran, 245 32 Staffanstorp (SE); WEGBRANT, Tobias, 244 66 Furulund (SE); DARMELL, Mattias, 211 34 Malmö (SE); MÅNSSON, Johnny, 265 75 Hyllinge (SE)
(74) Representative: Tetra Pak - Patent Attorneys SE
(86) International application number: PCT/EP2014/065464
(87) International publication number: WO 2015/028198

(56) References cited:
- EP-A1- 1 666 362
- EP-A1- 1 666 362
- EP-A1- 2 433 873
- EP-A1- 2 546 033
- EP-A2- 0 844 176
- WO-A1-00/64751
- BE-A1- 792 498
- DE-A1-102005 003 783
- US-A1- 2005 183 560

## Description

### Field of the Invention

The invention relates to a knife, and in particular a knife for a filling machine for separating packages from a tube of laminated packaging material.

### Background of the Invention

In filling machines for liquid food packages, such as sold by Tetra Pak® under the name Tetra Pak A1, a web of packaging material is sterilized, and is subsequently formed into a tube by making the longitudinal edges of the web overlap each other and sealing the overlap area. This tube is filled with liquid food continually, and the tube of packaging material is transversally sealed and cut such that separate packages with liquid food are formed. The cutting of packages is an important aspect of the filling machine, since the cut packages need to be separated from the tube in a timely and reliable manner. For certain package formats, the specifics of the packaging material and sealing operation may lead to a more difficult cutting operation, which may lead to unreliable and/or delayed separation of packages. Such a packaging-filling and cutting device is disclosed in the European patent application EP 1 666 362 A1.

### Summary of the invention

The invention provides an improved cutting knife for a sealing jaw arrangement of a filling machine. The knife is in use provided in a first member, and is designed to cooperate with a groove of a second member. The knife has a body provided with a cutting edge on one side thereof, which cutting edge is configured to cut through a packaging material. The body is further comprising a guide, said guide being configured to enter the groove for controlling a movement of the cutting edge into the groove. The guide is configured to enter the groove before the cutting edge enters the groove.

In one or more embodiments two guides are provided on the body on either side of the cutting edge.

In one or more embodiments the first member is a pressure jaw and the second member is a heating jaw.

In one or more embodiments the cutting edge is single-bevelled.

In one or more embodiments the guide is double-bevelled.

In one or more embodiments the cutting edge has an arrow shape with a tip.

In one or more embodiments the tip is configured to contact the packaging material first, before the rest of the cutting edge, and cut through a packaging material overlap area.

In one or more embodiments the tip is located in the middle of the cutting edge.

In one or more embodiments the cutting edge is serrated.

In one or more embodiments the body is configured to have asymmetric attachment points.

In one or more embodiments one of the attachment holes of the body has a different shape than the other attachment hole.

The invention also provides for a sealing jaw assembly comprising a pressure jaw and a heating jaw, having a knife according to any one of claims 1-11.

### Brief description of the drawings

The invention will be further described with reference to a preferred embodiment, as shown in the drawings in which:
Fig. 1 shows a top view of a steel plate for making a knife according to the invention,
Fig. 2 shows a top view of a knife according to the invention,
Fig. 3 shows a sectional view of the cutting edge of the knife,
Fig. 4 shows a sectional view of a guide of the knife,
Fig. 5 shows a perspective view of a pressure jaw that houses the knife of the invention,
Fig. 6 shows a perspective view of a heating jaw that cooperates with the pressure jaw,
Fig. 7 shows a sectional view of an inductor of the heating jaw,
Fig. 8 shows a sectional view of a part of the inductor and the guide, during use,
Fig. 9 shows a sectional view of a part of the inductor and the cutting edge, during use, and
Fig. 10 shows a part of a tube of packaging material and the knife of the invention.

### Detailed description of the invention

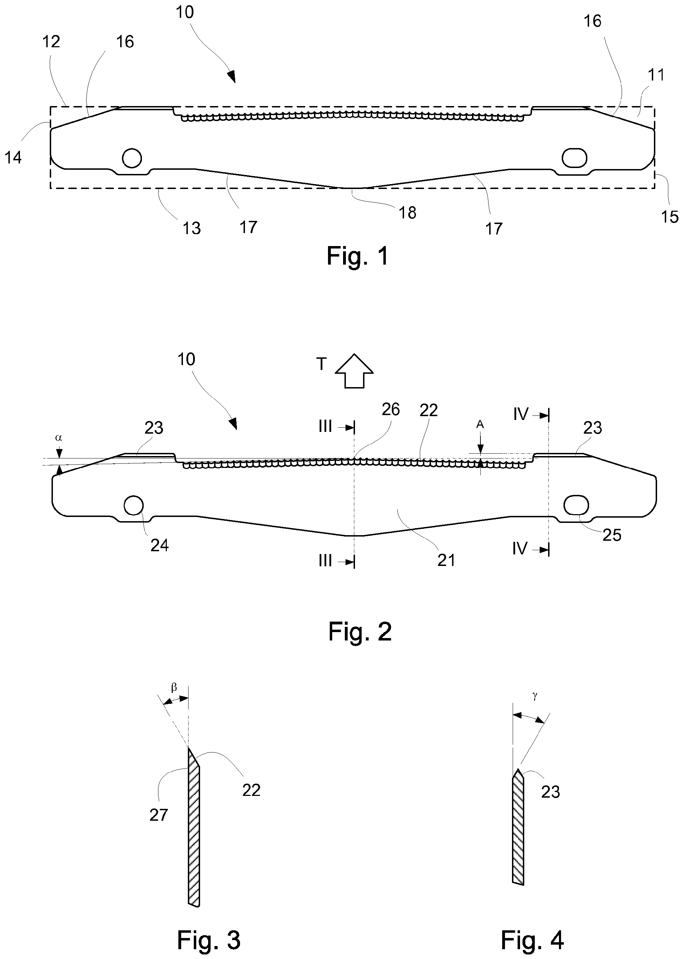

The present invention relates to a knife 10 for a sealing jaw in a filling machine, such as Tetra Pak® A1, for producing liquid food packages, being utilized to separate a continuous tube of packaging material and product into individual packages, in connection with the sealing of said tube, such as transversal sealing. The knife 10 is typically made from a stainless steel plate 11, indicated in Fig. 1, having a thickness of about 0.75 mm. The plate 11 has an oblong rectangular shape, having a front long side 12, a back long side 13, and left 14 and right 15 short sides, as viewed from above. Machining of the plate 11 will form a knife body 21 with different features of the knife.

A cutting edge 22 is formed into the front long side 12, and guides 23 are provided on either side of the cutting edge 22, also being located in the front long side 12. The body 11 is provided with first angled sides 16 from the outer edge of the guides 23 towards the left 14 and right 15 short sides.

The back side 13 of the plate 11 has a short portion 18, which is parallel to the longitudinal extension of the knife. On either side of said short portion 18, second angled sides 17 extend inwards towards the centre of the body 21, making the body narrower towards the ends. The knife body is slightly wider at the location of attachment holes 24, 25 on either end of the body 21, adjacent the guides 23.

The cutting edge 22 is formed into an arrow shape, having a tip 26 in the centre thereof. The angle of the arrow shaped cutting edge 22, in relation to a direction that is perpendicular to the intended travel direction T of the knife, is denoted α, and this angle is approx. 1.5 degrees. The cutting edge 22 is serrated, and is further single-bevelled, see Fig. 3, where the bevel angle β is about 30 degrees between a bottom surface 27 and the cutting edge 22. The guide 23 is double-bevelled, and the bevel angle γ is about 30 degrees between the bottom surface 27 and one of the bevels, making the total angle of the bevel about 60 degrees.

The guides 23 protrude outside the cutting edge 22, as can be seen in Fig. 2. The distance the guides 23 protrude outside the tip 26 of the cutting edge 12 is denoted A, and this is approximately 1.0 mm. It can further be seen in Fig. 2 that the tip 26 does not protrude outside the starting point of the bevels of the guides 23.

The attachment holes 24, 25 are shaped differently, in that the left attachment hole 24 is circular and the right attachment hole 25 is elongated, having two half-circular walls being connected with straight walls. The elongated hole 25 allows the knife to be mounted even if the distance between corresponding projections on the pressure jaw varies slightly, due to manufacturing tolerances.

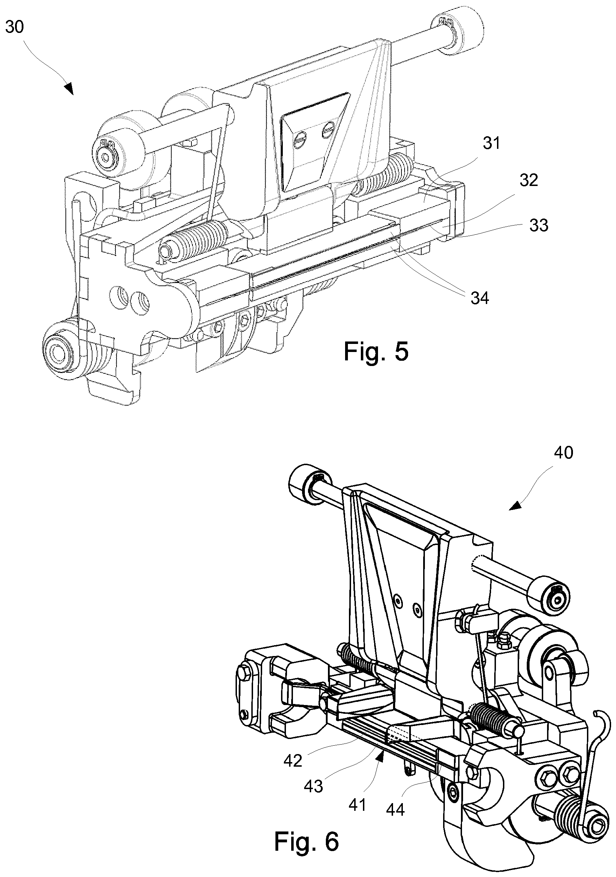

In Fig. 5, a pressure jaw 30 is shown, which in use will cooperate with a heating jaw. The pressure jaw 30 comprises two substantially identical pressure rails 31, 32, being placed on top each other. The pressure rails 31, 32 each has a track in which a sealing dolly 34 is arranged. The pressure rails 31, 32 are arranged on the pressure jaw a slight distance apart, such that a slot 33 is formed between the rails 31, 32. This slot 33 is formed to house the knife 10, and to allow said knife to exit out of the slot 33 during a cutting operation.

The height H of the slot 33 is larger than the thickness of the knife 10.

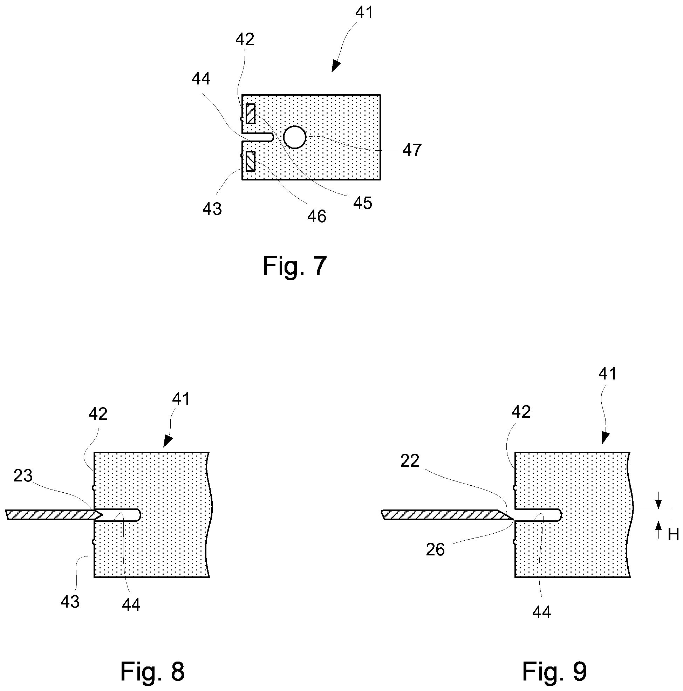

In Figs. 6, a heating jaw 40 is shown for interacting with the pressure jaw 30 during a sealing operation. The heating jaw 40 comprises an inductor 41, typically only comprising a shallow groove 44, into which the knife 10 can enter during the cutting action. The inductor further has an upper portion 42 and a lower portion 43, being separated by the groove 44, see also Fig. 7. The inductor 41 further comprises upper 45 and lower 46 conductors, for heating the packaging material during sealing, and a cooling conduit 47 to cool down the inductor 41.

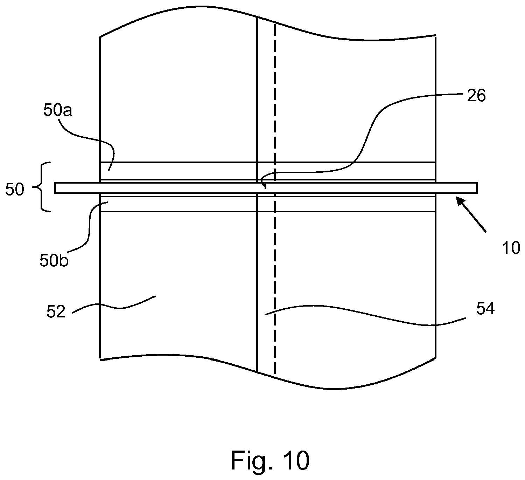

In use, the knife 10 is mounted in a holder in the pressure jaw 30. Said knife 10 is activated automatically by the reciprocating movement of the pressure jaw 30, e.g. through a cam arrangement. At the end of a sealing operation, wherein a sealing has been made in the tube of packaging material, the knife 10 is driven cross-wise to the tube, in the direction T, in order to separate the sealed tube into separate pillow-shaped packages. The knife enters in the centre of a transversal sealing zone of the tube of packaging material. The transversal sealing zone is shown in Fig. 10 and is denoted 5. It comprises two transversals seals 50a, 50b in between which the knife will act. The width of said sealing zone, crosswise to the extension of the tube, is not greater than the width of the serrated cutting edge 22.

During the cutting action, the knife 10 is brought towards the sealing zone. Figs. 8 and 9 show the position of the guides 23 and the tip of the cutting edge 22, when the guides 23 have just fully entered the groove 44. The double-bevelled guides 23 easily enter the groove 44, and position the knife 10 accurately in the groove 44, see Fig. 9. The tip 26 of the cutting edge 22 does not enter the groove 44 until the guides 23 have fully entered the groove 44, as seen in Figs. 8 and 9. Since the knife 10 is now accurately positioned in the groove 44, the single-bevelled cutting edge 22 enters the groove 44 while being fully guided by the guides 23. This guiding of the cutting edge 23 makes it possible to form the groove 44 with very tight tolerances and with only a very small clearance for the knife 10. This improves the cutting performance compared to having a wider slot.

In one aspect the invention provides a knife with a guide, being configured to be activated before the cutting edge, which controls an accurate positioning into a groove of the cutting edge. In one embodiment, the cutting edge is arrow-shaped having a central tip, making the cutting action gradual and requiring less force to push the knife through the packaging material. In one embodiment, the cutting edge is single-bevelled. In yet another aspect of the invention, the guide is double-bevelled.

As mentioned above the cutting edge 22 is arrow-shaped having a central tip 26. The use of the tip 26 will here be described in relation to Fig. 10. The position of the tip 26, being hidden in Fig. 10, is indicated with a short line. In use, when the knife 10 is approaching the transversal sealing zone 50 on the tube of packaging material 52, the tip 26 is configured to contact the packaging material first, before the rest of the cutting edge (22), and cut through a packaging material overlap area 54. The overlap area 54 is the area where the longitudinal edges of the web are overlapping each other and sealed, as mentioned in the introductory portion of the application. Due to the extra layer of packaging material the overlap area 54 will be the hardest to cut through in terms of force needed, and will be the area with the highest risk of delayed separation due to that more sticky polymer material is being present. By initiating the cut at the overlap area 54 with the tip 26 all the force can be concentrated in a single point and secure penetration by the knife 10. Further, since the tip 26 reaches the tube first, the time that the cut pieces will stay separated, with the knife 10 in between, will be as long as possible in the overlap area 54. This decreases the risk of the pieces adhering to each other again, and hence the risk of delayed separation is minimised.

The attachment holes 24, 25 can have other shapes than round and elongated. If the holes 24, 25 are shaped differently, and corresponding differently shaped attachment points are provided in the pressure jaw 30, the knife can only be mounted in one way. By the described configuration good cutting performance can be obtained. The left attachment hole 24 can e.g. be square, and the right attachment hole 25 can e.g. be triangular, and the pressure jaw 30 having correspondingly shaped attachment points.

Even though the pressure jaw 30 is shown comprising two pressure rails 31, 32, it is possible to form a similar arrangement from a single piece, or to form it from different pieces, being attached in different ways.

The knife 10 can be formed by casting, forging, grinding or milling, or a combination thereof, in a way known per se to the person skilled in the art.

Even though it is shown that the knife is mounted in the pressure jaw 30, it is possible to mount the knife in the heating jaw 40, and to have a shallow groove in the pressure jaw 30.

The knife 10 is described as being 0.75 mm thick, but it can be in the range between 0.5 and 1.25 mm. The single-bevelled cutting edge 22 is specified at 30 degrees, but it can be between 25 and 35 degrees. Correspondingly, the double-bevelled guides 23 are specified to have a tip angle of about 60 degrees, but this tip angle can be 40-80 degrees.

Sealing jaw is meant to describe either a pressure jaw or a heating jaw. A sealing jaw assembly designates a combination of a pressure jaw 30 and a heating jaw 40.

The above heating jaw 40 is described with an inductor, for induction heating, but it is of course possible to have other forms of heat sealing, such as impulse heating, constant heating or ultrasonic sealing, as is known to a person skilled in the art, without deviating from the invention.

All features described in connection with any aspect of the invention can be used with any other aspect of the invention. This means that the features a) single-bevelled cutting edge, b) arrow-shaped cutting edge, c) double-bevelled guide, d) differently shaped attachment holes, e) having one, two or more guides, etc. can be used individually or in any combination thereof.

Whilst the invention has been described with reference to a preferred embodiment, it will be appreciated that various modifications are possible within the scope of the invention.

In this specification, unless expressly otherwise indicated, the word 'or' is used in the sense of an operator that returns a true value when either or both of the stated conditions is met, as opposed to the operator 'exclusive or' which requires that only one of the conditions is met. The word 'comprising' is used in the sense of 'including' rather than in to mean 'consisting of'.

## Claims

1. Knife (10) for a sealing jaw arrangement of a filling machine, said knife (10) in use being provided in a first member (30), and designed to cooperate with a groove (44) of a second member (40), the knife (10) having a body (21) being provided with a cutting edge (22) on one side thereof configured to cut through a packaging material (52), **characterised in that** said body (21) further comprises a guide (23), said guide (23) being configured to enter the groove (44) before the cutting edge (22) enters the groove (44) for controlling a movement of the cutting edge (22) into the groove (44).

2. Knife (10) according to claim 1, wherein two guides (23) are provided on the body (21) on either side of the cutting edge (22).

3. Knife (10) according to any previous claim, wherein the first member (30) is a pressure jaw and the second member (40) is a heating jaw.

4. Knife (10) according to any previous claim, wherein the cutting edge (22) is single-bevelled.

5. Knife (10) according to any previous claim, wherein the guide (23) is double-bevelled.

6. Knife (10) according to any previous claim, wherein the cutting edge (22) has an arrow shape with a tip (26).

7. Knife (10) according to claim 6, wherein the tip (26) is configured to contact the packaging material (52) first, before the rest of the cutting edge (22), and cut through a packaging material overlap area (54).

8. Knife (10) according to claim 7, wherein the tip (26) is located in the middle of the cutting edge (22).

9. Knife (10) according to any previous claim, wherein the cutting edge (22) is serrated.

10. Knife (10) according to any previous claim, wherein the body (21) is configured to have asymmetric attachment points (24, 25).

11. Knife (10) according to claim 10, wherein one of the attachment holes (24; 25) of the body (11) has a different shape than the other attachment hole (25; 24).

12. Sealing jaw assembly comprising a pressure jaw (30) and a heating jaw (40), having a knife (10) according to any one of claims 1-11.

## Patentansprüche

1. Messer (10) für eine Siegelbackenanordnung einer Füllmaschine, wobei das Messer (10) im Gebrauch in einem ersten Element (30) vorgesehen und so ausgestaltet ist, dass es mit einer Rille (44) eines zweiten Elements (40) zusammenwirkt, wobei das Messer (10) einen Körper (21) aufweist, der auf einer Seite davon mit einer Schneidkante (22) versehen ist, die so gestaltet ist, dass sie durch ein Verpackungsmaterial (52) schneidet, **dadurch gekennzeichnet, dass** der Körper (21) ferner eine Führung (23) umfasst, wobei die Führung (23) so gestaltet ist, dass sie in die Rille (44) gelangt, bevor die Schneidkante (22) in die Rille (44) gelangt, damit eine Bewegung der Schneidkante (22) in die Rille (44) hinein gesteuert wird.

2. Messer (10) nach Anspruch 1, wobei zwei Führungen (23) an dem Körper (21) auf jeder Seite der Schneidkante (22) vorgesehen sind.

3. Messer (10) nach einem der vorhergehenden Ansprüche, wobei das erste Element (30) eine Druckbacke ist und das zweite Element (40) eine Heizbacke ist.

4. Messer (10) nach einem der vorhergehenden Ansprüche, wobei die Schneidkante (22) einseitig abgeschrägt ist.

5. Messer (10) nach einem der vorhergehenden Ansprüche, wobei die Führung (23) zweiseitig abgeschrägt ist.

6. Messer (10) nach einem der vorhergehenden Ansprüche, wobei die Schneidkante (22) eine Pfeilform mit einer Spitze (26) aufweist.

7. Messer (10) nach Anspruch 6, wobei die Spitze (26) so gestaltet ist, dass sie das Verpackungsmaterial (52) zuerst, vor der übrigen Schneidkante (22), berührt und durch einen Verpackungsmaterial-Überdeckungsbereich (54) schneidet.

8. Messer (10) nach Anspruch 7, wobei sich die Spitze (26) in der Mitte der Schneidkante (22) befindet.

9. Messer (10) nach einem der vorhergehenden Ansprüche, wobei die Schneidkante (22) gezahnt ist.

10. Messer (10) nach einem der vorhergehenden Ansprüche, wobei der Körper (21) so gestaltet ist, dass er asymmetrische Befestigungspunkte (24, 25) aufweist.

11. Messer (10) nach Anspruch 10, wobei eines der Befestigungslöcher (24; 25) des Körpers (11) eine andere Form aufweist als das andere Befestigungsloch (25; 24).

12. Siegelbackenanordnung, die eine Druckbacke (30) und eine Heizbacke (40) umfasst und ein Messer (10) nach einem der Ansprüche 1 bis 11 aufweist.

## Revendications

1. Couteau (10) pour agencement de mâchoires de scellage d'une machine à remplir, ledit couteau (10) étant lors de l'utilisation disposé dans un premier élément (30) et conçu pour coopérer avec une rainure (44) d'un second élément (40), le couteau (10) comportant un corps (21) pourvu d'un tranchant (22) sur un côté de celui-ci, configuré pour couper à travers un matériau d'emballage (52),
**caractérisé en ce que** ledit corps (21) comprend en outre un guide (23), ledit guide (23) étant configuré pour entrer dans la rainure (44) avant que le tranchant (22) entre dans la rainure (44) pour commander un mouvement du tranchant (22) dans la rainure (44).

2. Couteau (10) selon la revendication 1, dans lequel deux guides (23) sont disposés sur le corps (21) de chaque côté du tranchant (22).

3. Couteau (10) selon l'une quelconque des revendications précédentes, dans lequel le premier élément (30) est une mâchoire de pression et le second élément (40) est une mâchoire de chauffage.

4. Couteau (10) selon l'une quelconque des revendications précédentes, dans lequel le tranchant (22) est à biseau unique.

5. Couteau (10) selon l'une quelconque des revendications précédentes, dans lequel le guide (23) est à double biseau.

6. Couteau (10) selon l'une quelconque des revendications précédentes, dans lequel le tranchant (22) a une forme de flèche avec une pointe (26).

7. Couteau (10) selon la revendication 6, dans lequel la pointe (26) est configurée pour entrer en premier en contact avec le matériau d'emballage (52), avant le reste du tranchant (22), et couper à travers la zone de chevauchement (54) du matériau d'emballage.

8. Couteau (10) selon la revendication 7, dans lequel la pointe (26) est située au milieu du tranchant (22).

9. Couteau (10) selon l'une quelconque des revendications précédentes, dans lequel le tranchant (22) est en dents de scie.

10. Couteau (10) selon l'une quelconque des revendications précédentes, dans lequel le corps (21) est configuré pour comporter des points de fixation (24, 25) asymétriques.

11. Couteau (10) selon la revendication 10, dans lequel l'un des trous de fixation (24 ; 25) du corps (11) a une forme différente de celle de l'autre trou de fixation (25 ; 24).

12. Ensemble mâchoires de scellage comprenant une mâchoire de pression (30) et une mâchoire de chauffage (40), comportant un couteau (10) selon l'une quelconque des revendications 1 à 11.
